# EUROPEAN PATENT APPLICATION

(11) **EP 4 578 258 A1**
(43) Date of publication of application: **02.07.2025**
(21) Application number: 24217322.7
(22) Date of filing: 04.12.2024
(51) Int. Cl.: A01D 34/00, A01D 43/00, B25F 5/00, A01D 34/78, A01D 101/00

(54) **WALK-BEHIND POWER TOOL**

(30) Priority: 28.12.2023 CN 202311845307
(71) Applicant: Nanjing Chervon Industry Co., Ltd., Nanjing, Jiangsu 211106 (CN)
(72) Inventor: LI, Qingqiao, Nanjing (CN); ZHANG, Yujie, Nanjing (CN); SUN, Qing, Nanjing (CN)
(74) Representative: Sun, Yiming

(57) **Abstract**

A walk-behind power tool includes: an energy source providing energy for at least the movement of a working assembly; and a blowing device including a connecting portion configured to be connected to the walk-behind power tool, a first motor driving at least fan blades to rotate to generate an airflow, and a charging portion configured to be electrically connected to the walk-behind power tool so as to cause the first motor to obtain energy.

## Description

### TECHNICAL FIELD

The present application relates to a power tool and, in particular, to a walk-behind power tool and a blowing device applicable to the walk-behind power tool.

### BACKGROUND

A mower generally works outdoors. Therefore, when it is hot, a user works outdoors with a mower in the related art, feeling uncomfortable due to a high temperature. In addition, there are many insects outdoors, especially in places with abundant vegetation like lawns. The insects surround the user, significantly affecting the work efficiency of the user and degrading the work experience of the user.

How to improve the work experience of the user during the use of the mower is an urgent technical problem to be solved at present.

This part provides background information related to the present application, and the background information is not necessarily the existing art.

### SUMMARY

An object of the present application is to solve or at least alleviate part or all of the preceding problems. Therefore, an object of the present application is to provide a walk-behind power tool and a blowing device.

To achieve the preceding object, the present application adopts the technical solutions below.

A walk-behind power tool includes: a body configured to be mounted with a working assembly; a handle device used for a user to hold and connected to the body; an energy source providing energy for at least the movement of the working assembly and a blowing device including a connecting portion configured to be connected to the walk-behind power tool, a first motor driving at least fan blades to rotate to generate an airflow, and a charging portion configured to be electrically connected to the walk-behind power tool so as to cause the first motor to obtain energy.

In some examples, the blowing device further includes a blowing housing, the fan blades are disposed in the blowing housing, and a blowing port is formed on the blowing housing for the airflow to flow out.

In some examples, the charging portion includes a universal serial bus (USB) interface disposed on the blowing housing.

In some examples, the USB interface includes at least one of a type-C interface, a type-A interface, and a micro-USB interface.

In some examples, the blowing housing includes a blowing surface and a side surface that are located on different sides, the blowing surface is formed with the blowing port, and the USB interface is disposed on the side surface.

In some examples, the voltage of the USB interface is greater than or equal to 4 V and less than or equal to 6 V.

In some examples, the USB interface is electrically connected to the energy source through a wire.

In some examples, the charging portion includes an inductive charging mechanism at least partially disposed in the blowing housing.

In some examples, the inductive charging mechanism includes a receiving coil disposed in the blowing housing.

In some examples, the voltage of the receiving coil is greater than or equal to 10 V and less than or equal to 14 V; and/or the power of the receiving coil is greater than or equal to 7 W and less than or equal to 9 W.

In some examples, at least one baffle is rotatably disposed at the blowing port to adjust an air outflow direction.

In some examples, the airflow generated by the fan blades is directed by the fan blades to flow out from the blowing port.

In some examples, the blowing device is configured as a bladeless fan, and the airflow generated by the fan blades flows out from an air outlet after passing through an air supply duct.

In some examples, the blowing device is disposed on the handle device.

In some examples, the handle device includes two grips and a mounting portion, the mounting portion is disposed between the two grips, and the blowing device is disposed on the mounting portion.

A blowing device applicable to a walk-behind power tool includes: a connecting portion configured to be connected to the walk-behind power tool; a first motor driving at least fan blades to rotate to generate an airflow; and a charging portion configured to be electrically connected to the walk-behind power tool so as to cause the first motor to obtain energy.

A walk-behind power tool includes: a body configured to be mounted with a working assembly; a handle device used for a user to hold and connected to the body; an energy source providing energy for at least the movement of the working assembly; a power supply portion disposed on the handle device, where the power supply portion is configured to be electrically connected to the energy source and an accessory so that the energy source provides energy for the accessory.

In some examples, the accessory includes at least one of a blowing device, a mobile phone, a charging watch, a charging audio, and charging earphones.

In some examples, the power supply portion includes a USB interface, and the USB interface includes at least one of a type-C interface, a type-A interface, and a micro-USB interface.

In some examples, the walk-behind power tool further includes an inductive charging mechanism, where the inductive charging mechanism is configured to implement wireless charging between the power supply portion and the accessory.

### BRIEF DESCRIPTION OF DRAWINGS

FIG. 1 is a structural view of a mower in an example of the present application;
FIG. 2 is a schematic view showing that a blowing device of a mower is electrically connected to an energy source through a wire in an example of the present application;
FIG. 3 is a structural view of a mower from another angle of view in an example of the present application;
FIG. 4 is a schematic view of a blowing device and a handle device in an example of the present application;
FIG. 5 is a first exploded view of a blowing device and a handle device in an example of the present application;
FIG. 6 is a second exploded view of a blowing device and a handle device in an example of the present application;
FIG. 7 is a schematic view of the structure shown in FIG. 6 from another angle of view;
FIG. 8 is a schematic view of a blowing device in an example of the present application;
FIG. 9a is a side view of a blowing device in an example of the present application;
FIGS. 9b and 9c are sectional views taken along an A-A direction in FIG. 9a;
FIG. 10 is a schematic view of a partial structure of a mower in an example of the present application;
FIG. 11 is a schematic view showing that a blowing device of a mower is connected between two connecting rods through a fixed joint in an example of the present application;
FIG. 12 is an exploded view of the structure shown in FIG. 11; and
FIG. 13 is a schematic view of a power supply portion and accessories of a mower in an example of the present application, where a wire of the mower passes through a handle housing.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

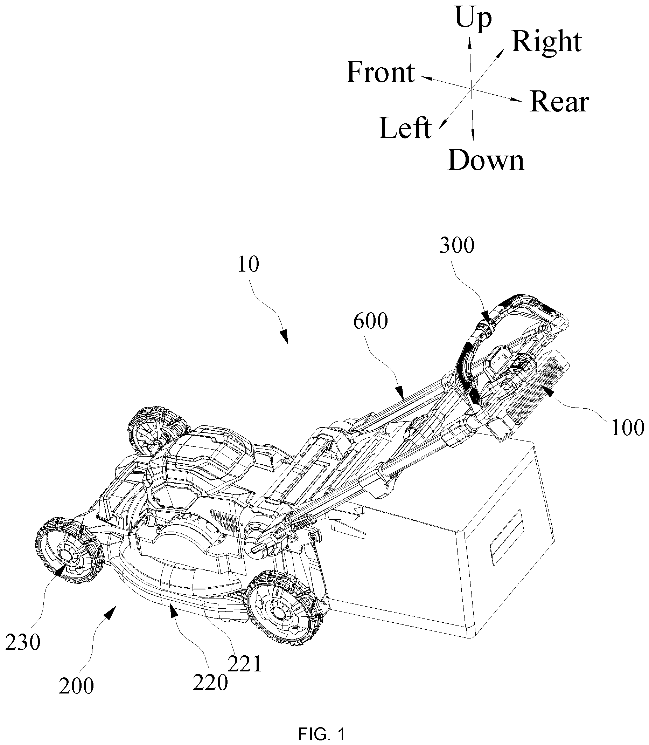

To clearly illustrate the technical solutions of the present application, an upper side, a lower side, a front side, and a rear side shown in FIG. 1 are further defined.

As shown in FIG. 1, the present application provides a walk-behind power tool 10 and a blowing device 100 applicable to the walk-behind power tool 10. In some examples, the walk-behind power tool 10 is a mower. In other examples, the walk-behind power tool 10 may be another walk-behind apparatus such as a snow thrower or a trolley.

In examples of the present application, the blowing device 100 is disposed on the walk-behind power tool 10, and an airflow blown out by the blowing device 100 flows toward a user. Thus, not only can the temperature around the user be reduced, but also insects near the user can be repelled, thereby protecting the user from insect disturbance and facilitating the improvement of the work experience of the user.

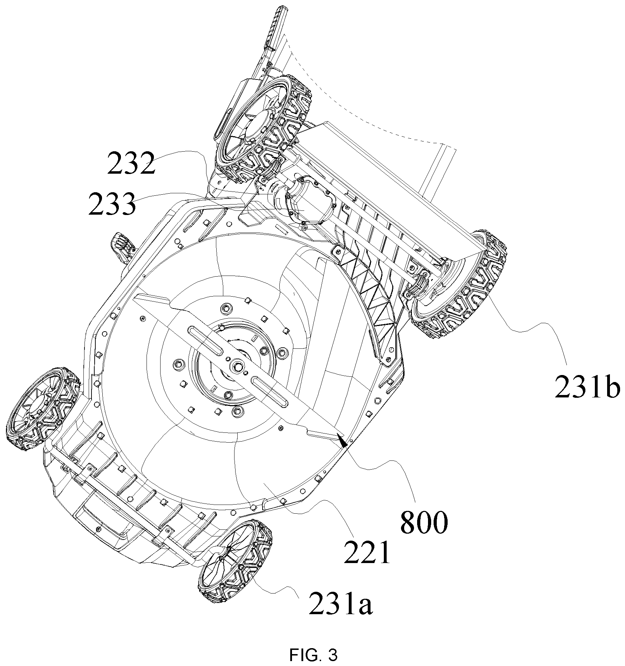

With continued reference to FIGS. 1 to 3, in addition to the blowing device 100, the walk-behind power tool 10 further includes a main machine including a body 200, a handle device 300, an energy source 400, connecting rods 600, and a working assembly 800. For example, the walk-behind power tool 10 is a mower, where the working assembly 800 includes a cutter, and the body 200 is used for mounting the working assembly 800. The body 200 includes a main housing 220, a second motor 210, and a walking assembly 230. The second motor 210 drives the cutter to rotate so as to implement a mowing function. The main housing 220 includes a chassis 221 formed with an accommodation space for accommodating at least part of the cutter. The accommodation space is open downward, and the cutter is disposed in the accommodation space and can cut vegetation when the cutter rotates at a high speed. The second motor 210 is mounted to the main housing 220 and includes an output shaft 211 that rotates about a first axis 201. The output shaft 211 is connected to the cutter so as to drive the cutter to move. The cutter is specifically a blade disposed in the accommodation space. The walking assembly 230 can drive the mower to walk on the ground, and the walking assembly 230 can at least drive the mower to move forward and backward and turn on the ground. The walking assembly 230 includes a third motor 232, a transmission mechanism 233, and multiple walking wheels 231. The third motor 232 drives, through the transmission mechanism 233, the multiple walking wheels 231 to rotate. In this example, the walking assembly 230 includes at least front walking wheels 231a and rear walking wheels 231b. The chassis 221 is configured to support the cutter and the walking assembly 230. The main housing 220 connects the handle device 300, the cutter, and the walking assembly 230 into a whole. The handle device 300 is used for the user to hold and is connected to the main housing 220 of the body 200 through the connecting rods 600. The energy source 400 is configured to provide energy for the movement of the working assembly 800.

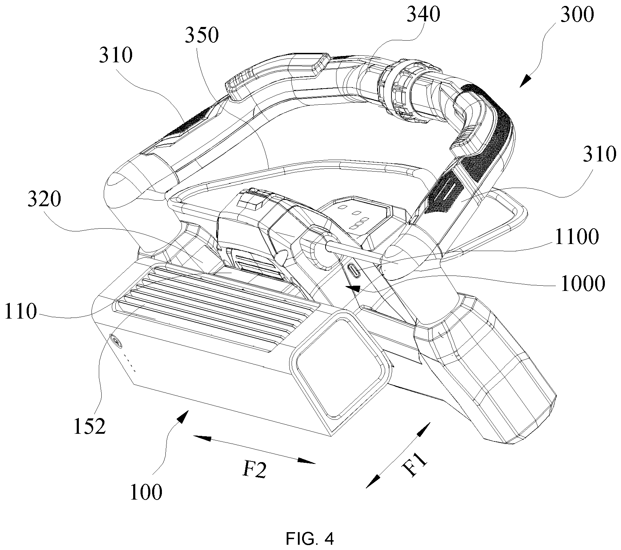

As shown in FIG. 4, the blowing device 100 is mounted on the handle device 300 along a first direction F1. With this configuration, the blowing device 100 is caused to be closer to the user, better reducing the temperature around the user and repelling the insects near the user.

In some examples, the handle device 300 includes two grips 310 and a mounting portion 320. The grips 310 are disposed on a side of the handle device 300 away from the body 200. The two grips 310 are spaced apart in a second direction F2. The mounting portion 320 is disposed between the two grips 310, and the blowing device 100 is disposed on the mounting portion 320. With this configuration, it is convenient to mount the blowing device 100. In addition, when the user holds the two grips 310 with both hands, the airflow blown out by the blowing device 100 can be caused to flow toward the body portion between the user's hands, thereby providing better use experience for the user. Of course, in other examples, one grip 310 may be provided.

For example, the handle device 300 further includes a grip rod 340. The two grips 310 are connected to each other through the grip rod 340. Thus, the part of the handle device 300 for the user to hold has a U-shaped structure. When operating the walk-behind power tool 10, the user can grip the grip rod 340 in addition to the grips 310. In this example, the mounting portion 320 includes a switch box, or a partial structure of the mounting portion 320 is configured as a switch box. An electronic element configured to control the working state of the working assembly 800 is disposed in the switch box.

The handle device 300 further includes a trigger switch 350 configured to control the mower 100 to mow grass.

For example, the blowing device 100 is rotatably connected to the mounting portion 320 so that the blowing device 100 blows out the airflow in an adjustable direction. Thus, the user can determine, according to needs, which part of the body is directly blown by the blowing device 100, thereby having better use experience.

For example, the blowing device 100 is mounted under the handle device 300, and the trigger switch 350 is mounted on the handle device 300. Optionally, the blowing device 100 is mounted on the lower surface of the mounting portion 320, and the trigger switch 350 is mounted on the upper side of the mounting portion 320. This configuration has the following advantages: the view of the user is not blocked, interference with the fold or storage of the handle device 300 is avoided, and a better blowing angle is provided.

The specific structure of the blowing device 100 is shown in FIGS. 4 to 10c. In an example, the blowing device 100 includes a connecting portion 110, fan blades 120, a first motor 130, and a charging portion 140. The connecting portion 110 of the blowing device 100 is configured to connect the blowing device 100 to the main machine of the walk-behind power tool 10. Optionally, the connecting portion 110 is connected to the mounting portion 320 of the handle device 300. The first motor 130 drives at least the fan blades 120 to rotate to generate an airflow. The charging portion 140 is configured to be electrically connected to the walk-behind power tool 10 so as to cause the first motor 130 to obtain energy. In some examples, the charging portion 140 is a battery pack with a charging function. The battery pack can directly provide energy for the first motor 130. After finishing discharging, the battery pack is electrically connected to the energy source 400 of the walk-behind power tool 10, and the energy source 400 can be used for charging the battery pack. In other examples, the charging portion 140 is a conductive connecting member that can electrically connect the first motor 130 to the energy source 400 of the walk-behind power tool 10. That is, the energy source 400 can directly provide energy for the first motor 130 through the charging portion 140.

Compared with a disposable battery powering the first motor 130, the present application provides the blowing device 100 to electrically connect the charging portion 140 to the energy source 400 of the walk-behind power tool 10. Thus, the blowing device 100 can obtain energy for the first motor 130 directly from the energy source 400 of the walk-behind power tool 10. Since the energy source 400 has much electricity, the endurance of the blowing device 100 is improved and the blowing device 100 is prevented from being charged frequently due to lack of endurance.

In some examples, the power of the first motor 130 is greater than or equal to 2 W and less than or equal to 9 W. Optionally, the power of the first motor 130 is 3 W. Optionally, the power of the first motor 130 is 4 W. Optionally, the power of the first motor 130 is 5 W. Optionally, the power of the first motor 130 is 6 W. Optionally, the power of the first motor 130 is 7 W. The output power of the first motor 130 is controlled so that the blowing device 100 has adjustable gears. The user can select an appropriate gear according to the needs, thereby preventing the airflow blown out by the blowing device 100 from being too strong or too weak to affect user experience.

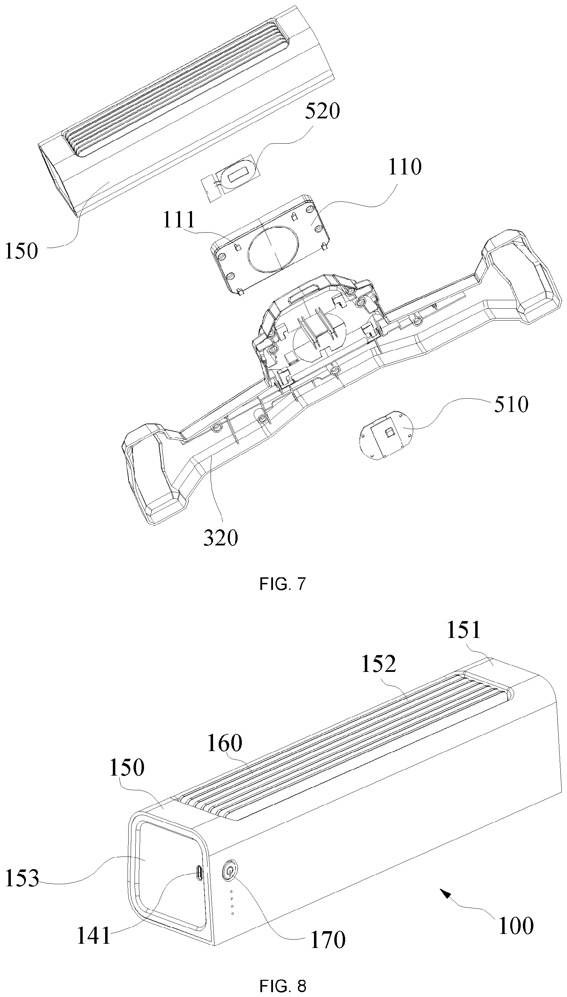

With continued reference to FIG. 8, the blowing device 100 further includes a blowing housing 150. The fan blades 120 and the first motor 130 are each disposed in the blowing housing 150. Furthermore, a blowing port 152 is formed on the blowing housing 150 for the airflow to flow out. The blowing housing 150 is further provided with a power button 170 that controls whether the first motor 130 is powered on.

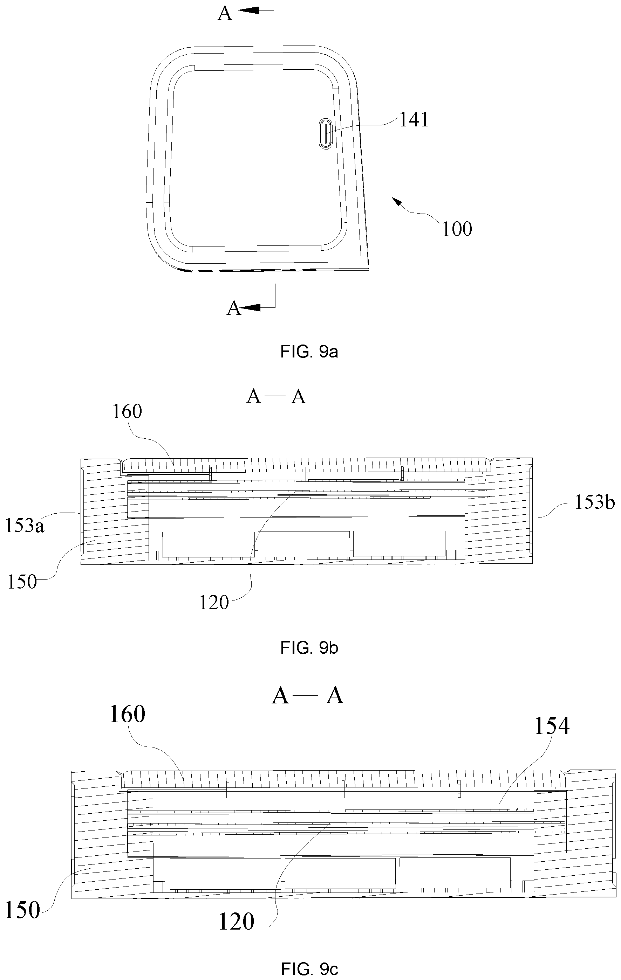

As shown in FIGS. 8 to 9c, in some examples, the blowing device 100 is configured as a blade fan. For example, as shown in FIG. 9b, the airflow generated by the rotation of the fan blades 120 is directed by the fan blades 120 to flow out from the blowing port 152. It is to be understood that the first motor 130 drives the fan blades 120 to rotate, the fan blades 120 disturb air to generate the airflow, the airflow is directed by the fan blades 120 directly, the blowing port 152 of the blowing housing only performs the function of guiding an air outflow direction, and the fan blades 120 are used as an airflow generation and output device.

As shown in FIG. 9c, in some examples, the blowing device 100 is configured as a bladeless fan. An air supply duct 154 is formed in the blowing housing 150. The fan blades 120 are disposed in the air supply duct 154. The airflow generated by the fan blades 120 flows out from an air outlet 152 after passing through the air supply duct 154. According to the principle of the bladeless fan in a related product, the first motor 130 drives the fan blades 120 to rotate, and the airflow is drawn into the air supply duct 154. The first motor 130 drives the fan blades 120 to generate the airflow. The airflow enters the air supply duct and passes through a part of the air supply duct in a specific shape that directs the movement of a fluid so that the airflow flows out from the blowing port 152.

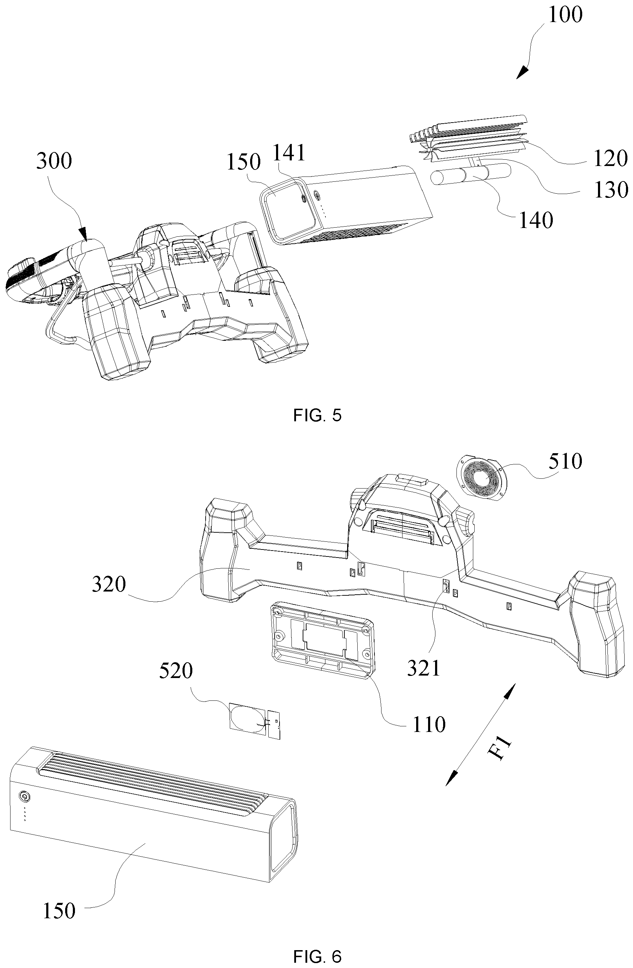

As shown in FIGS. 6 and 7, in some examples, the blowing housing 150 is approximately in the shape of a cube, and the connecting portion 110 is in the shape of a cube with a relatively small thickness. The connecting portion 110 is disposed on the sidewall surface of the blowing housing 150 facing the mounting portion 320 in the first direction F1. In some examples, the connecting portion 110 is integrally formed with the blowing housing 150. In other examples, the connecting portion 110 and the blowing housing 150 are split structures and are fixed to each other through connectors such as screws or engagement members.

For example, with continued reference to FIGS. 6 and 7, engagement members 111 are disposed on the connecting portion 110, and engagement slots 321 are provided on the mounting portion 320. The engagement members 111 can be engaged with the engagement slots 321 so that the connecting portion 110 is connected to the mounting portion 320. Of course, the engagement members 111 and the engagement slots 321 are interchanged. That is, the engagement slots 321 are provided on the connecting portion 110, and the engagement members 111 are disposed on the mounting portion 320.

To improve the strength of the engagement, multiple engagement members 111 and multiple engagement slots 321 are provided. The multiple engagement members 111 are configured to be in one-to-one correspondence with and can be engaged with the multiple engagement slots 321. With continued reference to FIG. 6, the mounting portion 320 is formed with four engagement slots 321 arranged in two rows. Each row of engagement slots 321 include two engagement slots 321 spaced apart in the second direction F2. Additionally, the distance between two lower engagement slots 321 is greater than the distance between two upper engagement slots 321. Correspondingly, with continued reference to FIG. 7, the connecting portion 110 is formed with four engagement members 111 arranged in two rows. Each row of engagement members 111 include two engagement members 111 spaced apart in the second direction F2. Additionally, the distance between two lower engagement members 111 is greater than the distance between two upper engagement members 111. Of course, in other examples, the number of engagement members 111 and the number of engagement slots 321 are not limited to four and may be adjusted to be two, three, or more according to the needs. In some examples, the connecting portion 110 and the mounting portion 320 may be connected to each other in other manners such as a sliding slot, a magnet, a felt, or a connector as long as the connecting portion 110 and the mounting portion 320 can be detachably and stably connected to each other. The manner in which the connecting portion 110 and the mounting portion 320 are connected to each other is not limited herein.

In some examples, the top surface of the blowing housing 150 is formed with a blowing surface 151, and the blowing port 152 is provided on the blowing surface 151. One or more blowing ports 152 may be provided according to the needs. Additionally, the blowing port 152 may be configured as a rectangular opening, a circular opening, an elliptical opening, or the like according to the needs. Of course, in other examples, the blowing port 152 may be provided on another surface of the blowing housing 150 so that the blowing surface 151 is formed. The number of blowing surfaces 151 is not limited to one. Multiple blowing surfaces 151 may be provided according to the needs to increase a blowing area. In addition, when the blowing device 100 is rotatably connected to the handle device through the connecting portion, the blowing device may be rotated to orient blowing surfaces 151 with different blowing areas toward the user.

With continued reference to FIG. 8 and FIGS. 9a to 9c, a baffle 160 is disposed at the blowing port 152 to adjust the air outflow direction. One or more baffles 160 may be provided according to the needs. Rotating shafts are formed at two ends of the baffle 160. The rotating shafts are rotatably connected in rotating shaft holes formed in the inner wall surface of the blowing port 152 of the blowing housing 150.

In an example, one blowing port 152 is provided. Multiple baffles 160 are rotatably connected in the blowing port 152. The rotation axes of the multiple baffles 160 are parallel to each other. In another example, multiple blowing ports 152 are provided. One baffle 160 is rotatably connected in each of the multiple blowing ports 152. It is to be noted that the baffle 160 may be driven manually to rotate, or a micro motor may be connected at the rotating shaft of the baffle 160 to drive the baffle 160 to rotate. Additionally, it is to be noted that when the blowing device 100 is not in operation, the baffle 160 can rotate to completely close the blowing port 152 so that a foreign matter is prevented from falling into the blowing housing 150 to affect the normal work of the fan and the first motor 130 inside.

A partial structure of the charging portion 140 is disposed on a side surface 153 of the blowing housing 150. In addition, the side surface 153 where the charging portion 140 is located and the preceding blowing surface 151 are located on different sides of the blowing housing 150. With this configuration, it is more convenient to connect the charging portion 140 to the energy source 400 of the walk-behind power tool 10, and the airflow blown out by the blowing device 100 is prevented from being interfered with or affected.

In some examples, with continued reference to FIG. 8 and FIGS. 9a to 9c, the charging portion 140 includes a universal serial bus (USB) interface defined as a first USB interface 141. The first USB interface 141 is disposed on the blowing housing 150 and specifically disposed on the left side surface 153a of the blowing housing 150 or the right side surface 153b of the blowing housing 150 in the second direction F2. Of course, the first USB interface 141 may be disposed on the bottom surface 153c of the blowing housing 150. The first USB interface 141 is provided so that the energy source 400 of the walk-behind power tool 10 can be electrically connected to the first USB interface 141 through a USB data cable.

It is to be noted that one first USB interface 141 may be provided. In an example, the first USB interface 141 is a type-C interface. In an example, the first USB interface 141 is a type-A interface. In an example, the first USB interface 141 is a micro-USB interface. Of course, two first USB interfaces 141 may be provided. In an example, one of the first USB interfaces 141 is a type-C interface, and the other is a type-A interface. In an example, one of the first USB interfaces 141 is a type-C interface, and the other is a micro-USB interface. In an example, one of the first USB interfaces 141 is a type-A interface, and the other is a micro-USB interface. Of course, three first USB interfaces 141 may be provided. The three first USB interfaces 141 are a type-C interface, a type-A interface, and a micro-USB interface, respectively.

In some examples, the voltage of the first USB interface 141 is greater than or equal to 4 V and less than or equal to 6 V. Optionally, the voltage of the first USB interface 141 is 4 V. Optionally, the voltage of the first USB interface 141 is 4.5 V. Optionally, the voltage of the first USB interface 141 is 5 V. Optionally, the voltage of the first USB interface 141 is 5.5 V. Optionally, the voltage of the first USB interface 141 is 6 V.

Of course, in some examples, the energy source 400 is electrically connected to the charging portion 140 with a wireless inductive technology in addition to the USB data cable to provide energy for the first motor 130. For example, the charging portion 140 includes an inductive charging mechanism. With continued reference to FIGS. 4 to 6, the inductive charging mechanism includes a transmitting coil 510 and a receiving coil 520. The transmitting coil 510 is electrically connected to the energy source 400 and an alternating voltage is applied to the transmitting coil 510 so that an alternating voltage of the same frequency is induced in the receiving coil 520. According to the needs, the alternating voltage in the receiving coil 520 may be rectified and filtered to form a direct current, thereby powering the first motor 130. It is to be noted that the wireless inductive technology is the existing art and is therefore not described in detail here.

In some examples, the inductive charging mechanism is at least partially disposed in the blowing housing 150. Optionally, the transmitting coil 510 is disposed in an energy housing of the energy source 400, and the receiving coil 520 is disposed in the blowing housing 150. With this configuration, the transmitting coil 510 and the receiving coil 520 are greatly stable and can be protected after being mounted. It is to be noted that according to the wireless inductive technology, the transmitting coil 510 and the receiving coil 520 need to be close to each other. Therefore, the energy source 400 and the blowing device 100 need to be as close to each other as possible.

To minimize magnetic flux loss, a shorter distance between the transmitting coil 510 and the receiving coil 520 is expected. For example, the transmitting coil 510 and the receiving coil 520 are configured to be parallel to and face each other, and the spacing between the transmitting coil 510 and the receiving coil 520 is greater than or equal to 2 mm and less than or equal to 4 mm.

In some examples, the voltage of the transmitting coil 510 is greater than or equal to 10 V and less than or equal to 14 V. In a specific example, the voltage of the transmitting coil 510 is 10 V. Optionally, the voltage of the transmitting coil 510 is 11 V. Optionally, the voltage of the transmitting coil 510 is 12 V. Optionally, the voltage of the transmitting coil 510 is 13 V. Optionally, the voltage of the transmitting coil 510 is 14 V.

In some examples, the power of the transmitting coil 510 is greater than or equal to 18 W and less than or equal to 22 W. Optionally, the power of the transmitting coil 510 is 18 W. Optionally, the power of the transmitting coil 510 is 19 W. Optionally, the power of the transmitting coil 510 is 20 W. Optionally, the power of the transmitting coil 510 is 21 W. Optionally, the power of the transmitting coil 510 is 22 W.

In some examples, the voltage of the receiving coil 520 is greater than or equal to 10 V and less than or equal to 14 V. Optionally, the voltage of the receiving coil 520 is 10 V. Optionally, the voltage of the receiving coil 520 is 11 V. Optionally, the voltage of the receiving coil 520 is 12 V. Optionally, the voltage of the receiving coil 520 is 13 V. Optionally, the voltage of the receiving coil 520 is 14 V.

In some examples, the power of the receiving coil 520 is greater than or equal to 7 W and less than or equal to 9 W. Optionally, the power of the receiving coil 520 is 7 W. Optionally, the power of the receiving coil 520 is 8 W. Optionally, the power of the receiving coil 520 is 9 W.

Of course, the blowing device 100 may electrically connect the energy source 400 to the charging portion 140 in the two charging manners: the USB data cable and the wireless inductive technology, thereby providing more options for the user.

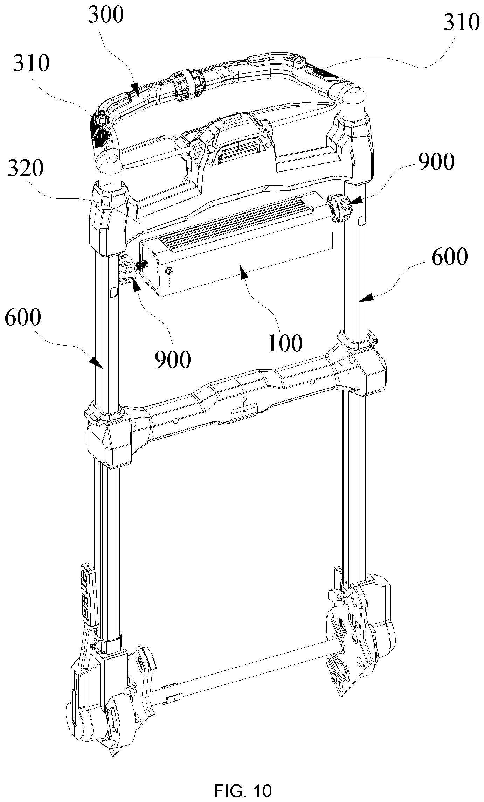

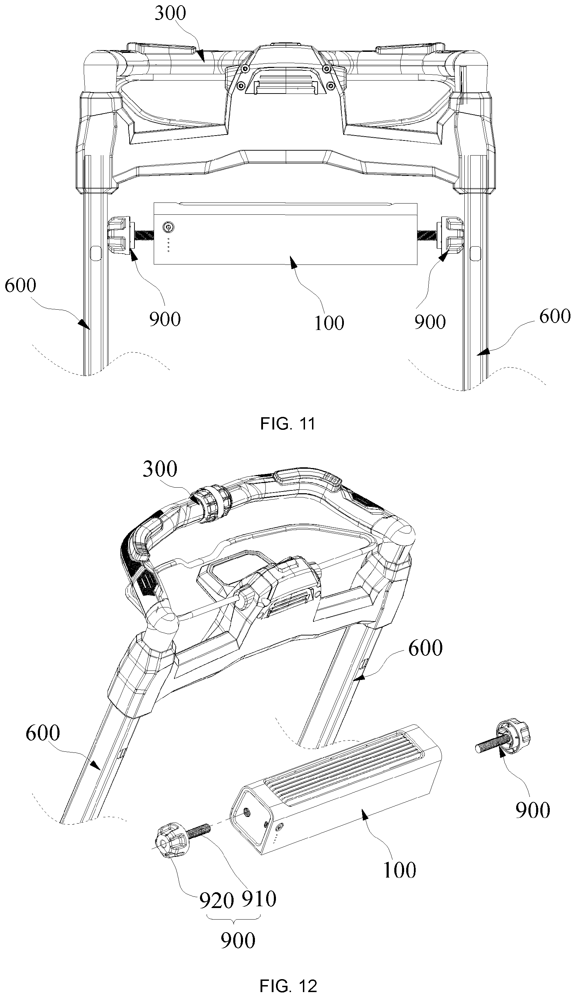

In addition, the blowing device 100 may be fixed between the two connecting rods 600, as shown in FIGS. 10 and 12, in addition to being connected to the mounting portion 320 of the handle device 300 through the connecting portion 110. The two connecting rods 600 are spaced apart in the second direction F2. For example, a fixed joint 900 is disposed on a side of the blowing device 100. The blowing device 100 is connected to or abuts between the two connecting rods 600 through the fixed joint 900.

In an example, one fixed joint 900 is provided. The fixed joint 900 is disposed on one side of the blowing device 100 in the second direction F2. The fixed joint 900 is moved in the second direction F2 so that the overall length of the fixed joint 900 and the blowing device 100 in the second direction F2 is increased. Thus, the blowing device 100 is connected to or abuts against one of the connecting rods 600, and the fixed joint 900 is connected to or abuts against the other connecting rod 600.

In an example, two fixed joints 900 are provided. The two fixed joints 900 are disposed on two sides of the blowing device 100 in the second direction F2. The fixed joints 900 are moved in the second direction F2 so that the overall length of the two fixed joints 900 and the blowing device 100 in the second direction F2 is increased. Thus, one of the fixed joints 900 is connected to or abuts against a respective one of the connecting rods 600, and the other fixed joint 900 is connected to or abuts against the other connecting rod 600.

When the fixed joint 900 abuts against the connecting rod 600, a limit structure or a non-slip structure is formed on the connecting rod 600 or the fixed structure to improve the stability of the abutment between the fixed joint 900 and the connecting rod 600. The limit structure may be a limit slot. The non-slip structure may be a non-slip surface or a non-slip tape. The fixed joint 900 is connected to the connecting rod 600 in connection manners including but not limited to a screw connection, insertion, a snap connection, and a magnetic connection.

With continued reference to FIG. 12, in an example, the fixed joint 900 includes a threaded rod 910 and an abutment member 920 that are connected to each other. The threaded rod 910 is threadedly connected to the blowing housing 150 of the blowing device 100. The threaded rod 910 is rotated so that the abutment member 920 can abut against the outer wall surface of the connecting rod 600. The abutment member 920 is threaded so that the threaded rod 910 moves in a threaded hole of the blowing device 100, thereby changing the position of the fixed joint 900 relative to the blowing device 100. This adjustment manner is simple and efficient. Additionally, the threaded connection has a self-locking function and is thus less prone to slip off.

It is to be noted that other functional members may be added to the blowing device 100 according to the needs. Thus, the blowing device 100 has a cooling function, a misting function, a humidifying function, a breeze function, and the like so that the blowing device 100 is formed as a device similar to a cooling fan, a misting fan, and the like.

The energy source 400 of the preceding walk-behind power tool 10 is electrically connected to the blowing device 100 directly. Compared with this solution, the present application further provides a walk-behind power tool 10 that includes a main machine including a body 200, a handle device 300, an energy source 400, connecting rods 600, a working assembly 800, a power supply portion 1000, and an accessory. For example, the walk-behind power tool 10 is a mower, where the working assembly 800 includes a cutter. The body 200 is used for mounting the working assembly 800 and includes a main housing 220, a second motor 210, and a walking assembly 230. The second motor 210 drives the cutter to rotate so as to implement a mowing function. The main housing 220 includes a chassis 221 formed with an accommodation space for accommodating at least part of the cutter. The accommodation space is open downward, and the cutter is disposed in the accommodation space and can cut vegetation when the cutter rotates at a high speed. The second motor 210 is mounted to the main housing 220 and includes an output shaft 211 that rotates about a first axis 201. The output shaft 211 is connected to the cutter so as to drive the cutter to move. The cutter is specifically a blade disposed in the accommodation space. The walking assembly 230 can drive the mower to walk on the ground, and the walking assembly 230 can at least drive the mower to move forward and backward and turn on the ground. The walking assembly 230 includes a third motor 232, a transmission mechanism 233, and multiple walking wheels 231. The third motor 232 drives, through the transmission mechanism 233, the multiple walking wheels 231 to rotate. In this example, the walking assembly 230 includes front walking wheels 231a and rear walking wheels 231b. The chassis 221 is configured to support the cutter and the walking assembly 230. The main housing 220 connects the handle device 300, the cutter, and the walking assembly 230 into a whole.

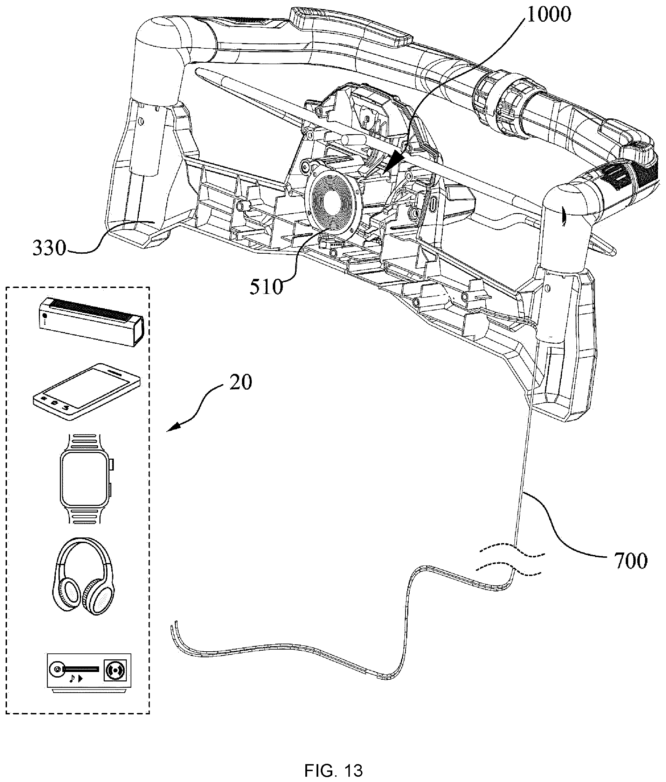

The handle device 300 is used for the user to hold and is connected to the body 200 through the connecting rods 600. The energy source 400 is configured to at least provide energy for the movement of the working assembly 800. As shown in FIG. 13, the power supply portion 1000 is disposed on the handle device 300. The power supply portion 1000 is configured to electrically connect the energy source 400 to the accessory 20 so that the energy source 400 provides energy for the accessory 20. The accessory 20 is any functional member that has a charging need. Specifically, the accessory 20 may be the preceding blowing device 100, a mobile phone, a charging watch, a charging audio, charging earphones, or the like.

It is to be noted that for the specific structures of the body 200, the handle device 300, the energy source 400, the connecting rods 600, and the working assembly 800, reference may be made to the preceding description. The details are not repeated here. The power supply portion 1000 can be electrically connected to all accessories 20 that have needs. That is to say, the power supply portion 1000 may sequentially charge multiple accessories 20. In addition, some of the accessories 20 need to remain fixed to the main machine for a long time, for example, the blowing device 100 and a charging audio. This type of accessory 20 is mounted in manners including at least the connection of the accessory 20 to the handle device 300 through the connecting portion 110 and the connection or abutment of the accessory 20 between the two connecting rods 600 through the fixed joint 900 described above. However, some of the accessories 20 need to remain fixed to the main machine for a short time only during charging, for example, a mobile phone, a charging watch, and charging earphones. For this type of accessory 20, an accommodation structure may be disposed on the main machine, and the accessory 20 is disposed in an accommodation space of the accommodation structure to maintain charging stability.

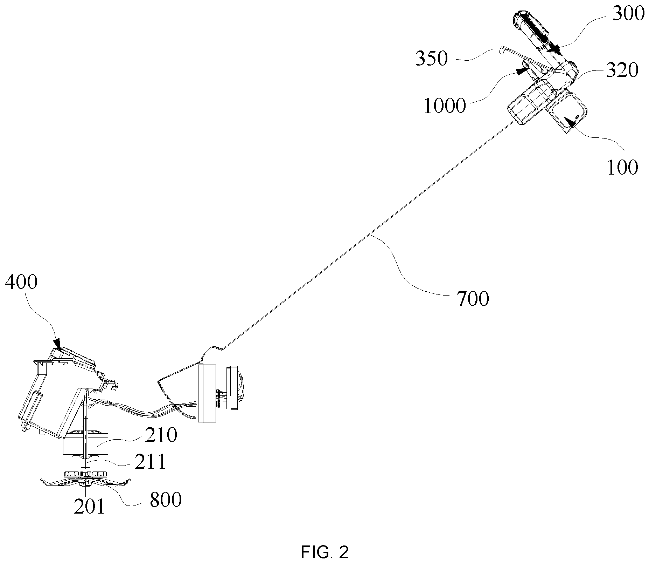

The specific structure of the power supply portion 1000 is also described below in detail through an example in which the walk-behind power tool 10 is a mower. With continued reference to FIGS. 2, 4, and 13, the power supply portion 1000 is specifically disposed on the mounting portion 320 of the handle device 300. The power supply portion 1000 is used as an intermediary member for the electrical connection between the energy source 400 and the accessory 20.

The energy source 400 is relatively heavy. Therefore, to cause the walk-behind power tool 10 to have a relatively low center of gravity to walk stably and be less prone to roll over, the energy source 400 is generally mounted to the body 200, as shown in FIG. 2. The power supply portion 1000 of the walk-behind power tool 10 is disposed on the mounting portion 320 of the handle device 300. Specifically, as shown in FIGS. 2 and 13, the energy source 400 may be electrically connected to the power supply portion 1000 through a wire 700. Then, the accessory 20 is electrically connected to the power supply portion 1000. Compared with a direct electrical connection between the accessory 20 and the energy source 400, the power supply portion 1000 is used as the intermediary member for the electrical connection so that it is more convenient to power the accessory 20, the operation of the user is more flexible, and it is also convenient to hide the wire 700 for the electrical connection between the energy source 400 and the power supply portion 1000. Thus, the walk-behind power tool 10 has a more compact structure, and the wire 700 is prevented from being exposed to interfere with the working assembly 800 or being cut by a foreign matter.

With continued reference to FIG. 13, the electrical wire 700 is inserted through one of the connecting rods 600 and enters a charging housing of the charging portion 140 via a handle housing 330 of the handle device 300. With this configuration, the wire 700 for the electrical connection between the energy source 400 and the power supply portion 1000 can be hidden, further reducing the likelihood of damage to the wire 700.

To implement the electrical connection between the power supply portion 1000 and the charging portion 140 of the accessory 20, in some examples, the power supply portion 1000 includes a USB interface, as shown in FIG. 2. This USB interface is defined as a second USB interface 1100. The second USB interface 1100 is provided so that the power supply portion 1000 can be electrically connected to the charging portion 140 of the accessory 20 directly through one USB data cable with two plugs. This connection manner is simple and effective.

It is to be noted that in addition to being disposed above the mounting portion 320 of the handle device 300 as shown in FIG. 2, the second USB interface 1100 may be disposed on any grip 310 or the grip rod 340 or may be disposed at any other positions on the handle device 300 in addition to the mounting portion 320, the grips 310, and the grip rod 340. Alternatively, the second USB interface 1100 may be disposed on the connecting rod 600 or another member close to the handle device 300 instead of the handle device 300 as long as the second USB interface 1100 is convenient for the user to operate and does not affect other members.

One second USB interface 1100 may be provided. In an example, the second USB interface 1100 is a type-C interface. In an example, the second USB interface 1100 is a type-A interface. In an example, the second USB interface 1100 is a micro-USB interface. Of course, two second USB interfaces 1100 may be provided. In an example, one of the second USB interfaces 1100 is a type-C interface, and the other is a type-A interface. In an example, one of the second USB interfaces 1100 is a type-C interface, and the other is a micro-USB interface. In an example, one of the second USB interfaces 1100 is a type-A interface, and the other is a micro-USB interface. Of course, three second USB interfaces 1100 may be provided. The three second USB interfaces 1100 are a type-C interface, a type-A interface, and a micro-USB interface, respectively.

In some examples, the voltage of the second USB interface 1100 is greater than or equal to 4 V and less than or equal to 6 V. In an example, the voltage of the second USB interface 1100 is 4 V. In an example, the voltage of the second USB interface 1100 is 4.5 V. In an example, the voltage of the second USB interface 1100 is 5 V. In an example, the voltage of the second USB interface 1100 is 5.5 V. In an example, the voltage of the second USB interface 1100 is 6 V.

The power supply portion 1000 is electrically connected to the charging portion 140 of the accessory 20 through the preceding USB data cable. In addition to this solution, the power supply portion 1000 is electrically connected to the accessory 20 with the wireless inductive technology. Specifically, the walk-behind power tool 10 further includes an inductive charging mechanism. The inductive charging mechanism is configured to implement wireless charging between the power supply portion 1000 and the accessory 20. The inductive charging mechanism here includes the transmitting coil 510 and the receiving coil 520. There is no structural difference between this inductive charging mechanism and the preceding inductive charging mechanism mounted between the energy source 400 and the blowing device 100. Only the object using the inductive charging mechanism is different. Therefore, the working principle and specific structure of the inductive charging mechanism are not repeated here.

In some examples, it is to be noted that the walk-behind power tool 10 further includes a display screen. The display screen is disposed on the handle device 300 to allow the user to conveniently view various data of the walk-behind power tool 10 in time. It is to be noted that the wire involved in the present application for the electrical connection to the second USB interface 1100 or the transmitting coil 510 may be shared by a switch board of the display screen or may be led separately from the energy source 400 according to wiring requirements. In an example, the transmitting coil 510 shares the wire with the switch board of the display screen, and the wire for the second USB interface 1100 is separately led from the energy source 400.

In some examples, the walk-behind power tool 10 further includes a storage box (not shown in the figure). The storage box may be mounted to the handle device 300. The storage box is configured to accommodate members that the user may carry whenever necessary, for example, a mobile phone, a water bottle, tissues, and a sun hat. Of course, in addition to the storage box, the walk-behind power tool 10 may further include a holder. The holder is configured to clamp a mobile phone, a camera, a water bottle, and the like.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A walk-behind power tool (10), comprising:
a body (200) configured to be mounted with a working assembly (800);
a handle device (300) used for a user to hold and connected to the body (200);
an energy source (400) providing energy for at least a movement of the working assembly (800); and
a blowing device (100) comprising:
a connecting portion (110) configured to be connected to the walk-behind power tool (10);
a first motor (130) driving at least fan blades (120) to rotate to generate an airflow; and
a charging portion (140) configured to be electrically connected to the walk-behind power tool (10) so as to cause the first motor (130) to obtain energy.

2. The walk-behind power tool (10) according to claim 1, wherein the blowing device (100) further comprises a blowing housing (150), the fan blades (120) are disposed in the blowing housing (150), and a blowing port is formed on the blowing housing (150) for the airflow to flow out.

3. The walk-behind power tool (10) according to claim 2, wherein the charging portion (140) comprises a universal serial bus (USB) interface disposed on the blowing housing (150).

4. The walk-behind power tool (10) according to claim 3, wherein the USB interface comprises at least one of a type-C interface, a type-A interface, and a micro-USB interface.

5. The walk-behind power tool (10) according to claim 3, wherein the blowing housing (150) comprises a blowing surface and a side surface that are located on different sides, the blowing surface is formed with the blowing port, and the USB interface is disposed on the side surface.

6. The walk-behind power tool (10) according to claim 3, wherein a voltage of the USB interface is greater than or equal to 4 V and less than or equal to 6 V.

7. The walk-behind power tool (10) according to claim 3, wherein the USB interface is electrically connected to the energy source (400) through a wire (700).

8. The walk-behind power tool (10) according to claim 2, wherein the charging portion (140) comprises an inductive charging mechanism at least partially disposed in the blowing housing (150).

9. The walk-behind power tool (10) according to claim 8, wherein the inductive charging mechanism comprises a receiving coil (520) disposed in the blowing housing (150).

10. The walk-behind power tool (10) according to claim 9, wherein a voltage of the receiving coil (520) is greater than or equal to 10 V and less than or equal to 14 V; and/or
power of the receiving coil (520) is greater than or equal to 7 W and less than or equal to 9 W.

11. The walk-behind power tool (10) according to claim 2, wherein at least one baffle (160) is rotatably disposed at the blowing port to adjust an air outflow direction.

12. The walk-behind power tool (10) according to claim 2, wherein the airflow generated by the fan blades is directed by the fan blades to flow out from the blowing port.

13. The walk-behind power tool (10) according to claim 2, wherein the blowing device is configured as a bladeless fan, and the airflow generated by the fan blades flows out from an air outlet after passing through an air supply duct.

14. The walk-behind power tool (10) according to claim 1, wherein the blowing device is disposed on the handle device (300).

15. The walk-behind power tool (10) according to claim 14, wherein the handle device (300) comprises two grips (310) and a mounting portion (320), the mounting portion (320) is disposed between the two grips (310), and the blowing device is disposed on the mounting portion (320).
